# EUROPÄISCHE PATENTSCHRIFT

(11) **EP 2 697 030 B1**
(45) Veröffentlichungstag und Bekanntmachung des Hinweises auf die Patenterteilung: **04.05.2016**
(21) Anmeldenummer: 13711424.5
(22) Anmeldetag: 22.03.2013
(51) Int. Cl.: B29L 11/00, B29C 45/16, B29C 45/00

(54) **VERFAHREN ZUR HERSTELLUNG VON MEHRSCHICHTIGEN KUNSTSTOFF-FORMTEILEN AUS EINEM EINHEITLICHEN THERMOPLASTISCHEN KUNSTSTOFF**
METHOD FOR PRODUCING MULTILAYER PLASTIC MOULDED ARTICLES FROM A UNIFORM THERMOPLASTIC RESIN
PROCÉDÉ DE FABRICATION DES PIÈCES MOULÉES MULTICOUCHES EN MATIÈRE PLASTIQUE À PARTIR D'UNE MATIÈRE THERMOPLASTIQUE UNITAIRE

(30) Priorität: 30.03.2012 DE 102012205196
(43) Veröffentlichungstag der Anmeldung: 19.02.2014
(73) Patentinhaber: Sumitomo (SHI) Demag Plastics Machinery GmbH, 90571 Schwaig (DE)
(72) Erfinder: LÜCK, André, 90530 Wendelstein (DE)
(74) Vertreter: Rau, Schneck & Hübner Patentanwälte Rechtsanwälte PartGmbB
(86) Internationale Anmeldenummer: PCT/EP2013/056114
(87) Internationale Veröffentlichungsnummer: WO 2013/144025

(56) Entgegenhaltungen:
- EP-A1- 1 785 255
- EP-A1- 2 402 140
- WO-A1-2011/061638
- DE-A1- 3 809 969
- DE-C2- 4 324 275

## Beschreibung

Die Erfindung betrifft ein Verfahren zur Herstellung von mehrschichtigen Kunststoff-Formteilen aus einem einheitlichen thermoplastischen Kunststoff, insbesondere zur Herstellung von optischen Bauteilen

Ein Stand der Technik ist durch die EP 2 402 140 A1 repräsentiert, die eine Kunststoffspritzvorrichtung mit einer Plastifiziereinheit umfassend eine Plastifizierschnecke und ein davon versorgtes Spritzgießwerkzeug zeigt. Die EP 1 785 255 A1 und DE 38 09 959 A1 stellen lediglich technologischen Hintergrund dar.

Die vorliegende Erfindung spielt eine besondere Rolle im Zusammenhang mit der Herstellung von optischen Bauteilen, wie beispielsweise Linsen für LED-Leuchteneinheiten von Kraftfahrzeugen. Die optische Leistungsfähigkeit dieser Linsen hängt dabei u. a. von der Wanddicke, dem Brechungsindex des verwendeten Kunststoffmaterials und insbesondere der Gestaltung der Linsenoberflächen ab. Je nach Einsatzzweck werden Wanddicken für solche Linsen in der Größenordnung von 5 bis 50 mm verlangt, was im Kunststoffspritzguss als "dickwandig" gilt.

Bei der Herstellung solcher dickwandiger Bauteile stellen sich verschiedene Probleme, wie beispielsweise die erhebliche Verlängerung der Zykluszeit, da dicke Bauteile einer hohen Kühlzeit im Werkzeug bedürfen. Auch müssen dickwandige Kunststoffteile über eine ausreichend lange Zeit mit Nachdruck im Werkzeug beaufschlagt werden, ohne dass das Kunststoffmaterial im Angussbereich erstarrt. Ferner ist eine gleichmäßige und langsame Füllung der Kavität im Spritzgießwerkzeug wichtig, um Fließlinien oder dergleichen zu vermeiden.

Zur Behebung der vorstehenden Probleme bietet sich als Fertigungstechnologie für dickwandige Linsen das sogenannte Mehrschicht-Spritzgießen an, bei dem das Bauteil aus einem einheitlichen thermoplastischen Kunststoff aus mehreren Schichten schrittweise spritzgegossen wird. In Abhängigkeit u. a. von der Wanddickenverteilung, der Anordnung der jeweiligen Schichten, der Reihenfolge der "Teilschüsse" und unterschiedlicher Werkzeugtemperaturen in den einzelnen Kavitäten des Spritzgießwerkzeuges lassen sich bei Mehrschicht-Spritzgießen im Vergleich zum Einschichtspritzen eine bessere Qualität des Bauteils bei gleichzeitig erheblicher Verkürzung der Zykluszeiten erreichen. Letzteres ist u. a. darauf zurückzuführen, dass die Wanddicke des herzustellenden Bauteils in einer quadratischen Abhängigkeit in die Berechnung der Kühlzeit eingeht.

Eine Darstellung der Vorteile des Mehrschicht-Spritzgießens wurde auf der 2. Fachkonferenz - "Kunststoffe in optischen Systemen" des VDI am 08. und 09. November 2011 in Baden-Baden, DE im Rahmen des Vortrags "Herstellung von optischen Formteilen aus transparenten Thermoplasten durch Mehrschichtspritzgießen" von Dipl.-Ing. Olaf Zöllner (Bayer Material Sience AG, Leverkusen) gegeben. Daraus wird deutlich, dass die Zykluszeiten von beispielsweise 600 Sekunden für zwei Einschichtlinsen über 580 Sekunden für zwei Zweischichtlinsen auf 480 Sekunden für zwei Dreischichtlinsen reduziert werden können. Gleichzeitig werden bei einem solchen Mehrschicht-Bauteil das Schwindungspotential und dementsprechend Abkühl- und druckbedingte Schwindungsunterschiede und Spannungen reduziert. Von Vorteil ist gemäß dieser Quelle ferner, dass bei dem dort dargestellten Sandwich-Dreischicht-Spritzgießverfahren der Vorspritzling nicht sehr präzise gefertigt werden muss.

Maschinentechnisch ist es aus dem Stand der Technik bekannt, für die unterschiedlichen Spritzlinge entsprechend der Zweikomponenten-Spritzgießtechnik zwei unterschiedliche Plastifiziereinheiten an dem Spritzgießwerkzeug zu verwenden, obwohl das gleiche Kunststoffmaterial für beide Spritzlinge verwendet wird. Bei einer solchen Zweikomponenten-Maschinentechnik wird in der Regel ein Drehteller oder eine Wendeplatte für das Umsetzen des Vorspritzlings verwendet, was einen zusätzlichen Raumbedarf für die Spritzgießmaschine bedingt, obwohl gerade bei der Herstellung optischer Bauteile diese eigentlich relativ klein sind.

Insgesamt ist der bekannte maschinentechnische Ansatz zur Herstellung mehrschichtiger Kunststoff-Formteile aus einem einheitlichen thermoplastischen Kunststoff unnötig aufwändig und damit kostenintensiv.

Ein weiterer Nachteil liegt darin, dass die unterschiedlichen, aus einem einheitlichen Kunststoffmaterial bestehenden Schichten eines Bauteils aus unterschiedlichen Plastifiziereinheiten gespritzt werden, so dass die Verweilzeit des Materials in diesen Plastifiziereinheiten unter Umständen sehr lange werden kann. Bei optischen Materialien sind solche lange Verweilzeiten allerdings im Hinblick auf thermisch bedingte Verschlechterung des Materials von Nachteil.

Zur Vermeidung der vorstehenden Nachteile ist auch bereits ein sogenarintes Tandem-Spritzgießen bekannt, bei dem lediglich eine Plastifiziereinheit mit einer Plastifizierschnecke vorgesehen ist, die allerdings zuerst eine Kavität des Spritzgießwerkzeuges beispielsweise für den Vorspritzling in einem eigenständigen, kompletten Spritz-, Nachdruck- und Dosier-Vorgang bedient. Wenn dieser Spritzgießzyklus abgeschlossen ist, wird parallel zu der Kühlphase für das Spritzgießteil die zweite Kavität für den Nachspritzling entleert und danach mit entsprechendem Spritz- und Nachdruck versorgt. Die Kühlphase dieser zweiten Kavität wird nun zum Dosieren und Entformen der ersten Kavität herangezogen, anschließend beginnt der Doppelzyklus von Neuem.

Nachteilig bei diesem Tandem-Spritzgießen ist die Tatsache, dass immer eine ausreichend lange Kühlzeit benötigt wird, die bei beiden Kavitäten möglichst gleich lang sein sollte.

Diese Forderung widerspricht allerdings den Bedingungen gerade bei mehrschichtig aufgebauten optischen Bauteilen, da hier der Vorspritzling, bei dem es sich in der Regel um den dicken Kern der Linse handelt, eine deutliche größere Wanddicke als der in der zweiten Kavität auf den Vorspritzling gespritzte Nachspritzling in Form der dünneren Oberflächenschichten der Linse aufweist. Aufgrund der unterschiedlichen Wanddicken sind die Kühlphasen für Vor- und Nachspritzling deutlich unterschiedlich. Angleichungen haben ihre Grenzen, vor allem dann, wenn der Nachspritzling sehr dünn wird, was an sich für eine optimale Abformung der Oberflächen von Linsen in vielen Fällen sehr sinnvoll ist. Zu ergänzen ist noch die Tatsache, dass für den Vorspritzling niedrige Qualitätsanforderungen gegebenen sind, da dieser weniger kritisch bezüglich der Maßhaltigkeit ist. Der Vorspritzling wird vom Nachspritzling überspritzt, wodurch ungleichmäßige Schwindungen des Vorspritzlings ausgeglichen werden.

Die WO 2011/061638 A1 als nächstkommender Stand der Technik offenbart eine Spritzgießmaschine zur Herstellung von mehrschichtigen Kunststoff-Formteilen aus einem einheitlichen thermoplastischen Kunststoff, umfassend nur eine Plastifiziereinheit mit einer Plastifizierschnecke und ein davon versorgtes Spritzgießwerkzeug. Letzteres weist mindestens ein Paar von Formkavitäten auf, von denen eine erste Kavität - die im Folgenden so bezeichnete "Vor-Kavität" - für einen Vorspritzling und eine zweite Kavität - im Folgenden als "Nach-Kavität" bezeichnet - für einen auf den Vorspritzling zu spritzenden Nachspritzling bestimmt ist. Ferner weist das Spritzgießwerkzeug einen der Einspritzdüse der Plastifiziereinheit nachgeordneten Verteiler auf, der die Einspritzdüse der Plastifiziereinheit über zwei Zweigkanäle mit jeweils der Vor- und Nach-Kavität verbindet. In beiden Zweigkanälen jeweils ein steuerbares Verschlussorgan aufzunehmen, wird durch die DE 43 24 275 C2 angeregt.

Ausgehend von den geschilderten Problemen des Standes der Technik liegt in der Erfindung die Aufgabe zu Grunde, eine Steuerung einer solchen Spritzgießmaschine anzugeben, mit deren Hilfe qualitativ verbesserte Formteile herstellbar sind.

Das entsprechende Herstellungsverfahren ist laut Patentanspruch 1 durch folgende Verfahrensschritte beim Spritzgießen charakterisiert:
- Spritzen des Vorspritzlings in der Vor-Kavität bei geschlossenem Verschlussorgan im Zweigkanal zur Nach-Kavität,
- im selben Einspritzhub der Plastifizierschnecke Spritzen des Nachspritzlings auf einem aus einem Vorschuss stammenden, in der Nach-Kavität sitzenden Vorspritzling bei geöffnetem Verschlussorgan im Zweigkanal zur Nach-Kavität unter gleichzeitigem Kühlen des Vorspritzlings,
- gleichzeitiges Beaufschlagen von Vor- und Nach-Kavität am Ende desselben Einspritzhubes der Plastifizierschnecke mit Nachdruck bei geöffneten Verschlussorganen in den Zweigkanälen zur Vor- und Nach-Kavität unter gleichzeitigem Kühlen von Vor- und Nachspritzling, sowie
- weiteres Kühlen von Vor- und Nachspritzling sowie Entnahme von Vor- und Nachspritzling aus dem Spritzgießwerkzeug während des Rückzuges der Plastifizierschnecke der Plastifiziereinheit und der Aufbereitung des Kunststoffmaterials für den folgenden Einspritzhub der Plastifizierschnecke.

Durch die erfindungsgemäße Abfolge der auf der Spritzgießmaschine laufenden Herstellungsschritte ergibt sich der Vorteil, dass Vor- und Nachspritzling in zwei direkt aufeinander folgenden Spritzphasen hergestellt werden, die von einer gemeinsamen Nachdruckphase für den Vorund Nachspritzling gefolgt werden. Dabei werden die beiden Kavitäten gleichzeitig mit Nachdruck versorgt, so dass insgesamt die Zykluszeit erheblich reduziert wird. Da ferner bei ein und demselben Einspritzhub der Plastifizierschnecke sowohl die Vor- als auch die Nach-Kavität gefüllt werden, wird der Massedurchsatz pro Zeiteinheit erhöht. Entsprechend verringert sich die Verweilzeit des Kunststoffmaterials in der Plastifiziereinheit, was im Hinblick auf die Herstellung von optischen Bauteilen der Materialqualität erheblich zu Gute kommt. Schließlich kann die Zeit für das Kühlen von Vor- und Nachspritzling und deren Entnahme für den Rückzug der Plastifizierschnecke und die Aufbereitung des Kunststoffmaterials für den folgenden Schuss genutzt werden.

Zusammenfassend sind mit Hilfe der Erfindung mehrschichtige KunststoffFormteile aus einem einheitlichen thermoplastischen Kunststoff mit geringerem maschinentechnischen Aufwand, geringerer Zykluszeit und hoher Bauteilqualität materialschonend herzustellen. Der Herstellungsprozess ist dabei einfach zu realisieren, da keine zwei Plastifiziereinheiten im Steuerungsablauf aufeinander abgestimmt werden müssen. Ferner muss nur ein Massepolster mit einer entsprechenden Dosierzeit und einem geeigneten Druckverlauf der Plastifizierschnecke während des mehrphasigen Einspritzhubes steuerungstechnisch beherrscht werden.

Der Verteiler im Spritzgießwerkzeug weist einen zwischen der Einspritzdüse der Plastifiziereinheit und dem Zweigkanälen angeordneten Heißkanal auf. Damit wird die Förderbarkeit des thermoplastischen Materials während der unterschiedlichen Einspritzphasen für Vor- und Nachspritzling unterstützt.

Gemäß alternativer Realisierungsmöglichkeiten für die Spritzgießmaschine und das darauf ablaufende Betriebsverfahren kann das Verschlussorgan im Zweigkanal zur Vor-Kavität während des Spritzens des Nachspritzlings geschlossen oder auch offen sein.

Bei geschlossenem Zweigkanal zur Vor-Kavität kann eine sehr exakte Regelung des Füllvorganges des Nachspritzlings erreicht werden, allerdings mit der Einschränkung, dass während dieses Vorganges der Vorspritzling ohne Massedruck und somit ohne Nachdruck auskommen muss und dadurch einer Schwindung unterliegt, welche sich in Einfallstellen äußern kann.

Umgekehrt, bei geöffnetem Zweigkanal zur Vor-Kavität wird parallel der Vorspritzling mit dem gleichen Massedruck während der Füllzeit versorgt, wie sie zur Füllung des Nachspritzlings notwendig ist, was einer Schwindung und somit Einfallstellen entgegenwirken kann. Allerdings kann dadurch einerseits die exakte Regelung des Füllvorganges des Nachspritzlings erschwert werden, was wiederum zu Qualitätsschwankungen des Nachspritzlings führen kann, andererseits kann bei sehr dünnwandigen Nachspritzlingen der Vorspritzling mit sehr hohem Massedruck beaufschlagt werden, was ebenfalls zu Qualitätsproblemen des Vorspritzlings führen kann. Die Wahl der geeigneten Realisierungsmöglichkeit hängt in jedem Fall von den Bauteilgeometrien von Vor- und Nachspritzling ab. Eine produktionstechnische Weiterbildung sieht schließlich vor, dass der aus der Vor-Kavität entnommene Vorspritzling direkt in die Nach-Kavität zum Überspritzen mit dem Nachspritzling im darauffolgenden Einspritzhub der Plastifizierschnecke umsetzbar ist. Damit wird der Handhabungsaufwand für den Vorspritzling minimiert. Ferner weist dieser aufgrund des vorherigen Spritzens noch eine erhöhte Temperatur auf, was das Umspritzen mit dem Nachspritzling ohne störende Grenzschichten zwischen Vorund Nachspritzling unterstützt.

Weitere Merkmale, Einzelheiten und Vorteile der Erfindung ergeben sich aus der nachfolgenden Beschreibung von Ausführungsbeispielen von Spritzgießmaschinen und entsprechenden Betriebsverfahren anhand der beigefügten Zeichnungen. Es zeigen:
- Fig. 1 bis 3: schematische Schnittdarstellungen einer Spritzgießmaschine in drei aufeinanderfolgenden Produktionszwischenschritten für ein optisches Bauteil in einer ersten Verfahrensvariante,
- Fig. 4 bis 6: schematische Schnittdarstellungen analog. Fig. 1 bis 3 in einer zweiten Produktionsvariante, und
- Fig. 7: eine Schnittdarstellung einer in einem Mehrschichtverfahren hergestellten optischen Linse.

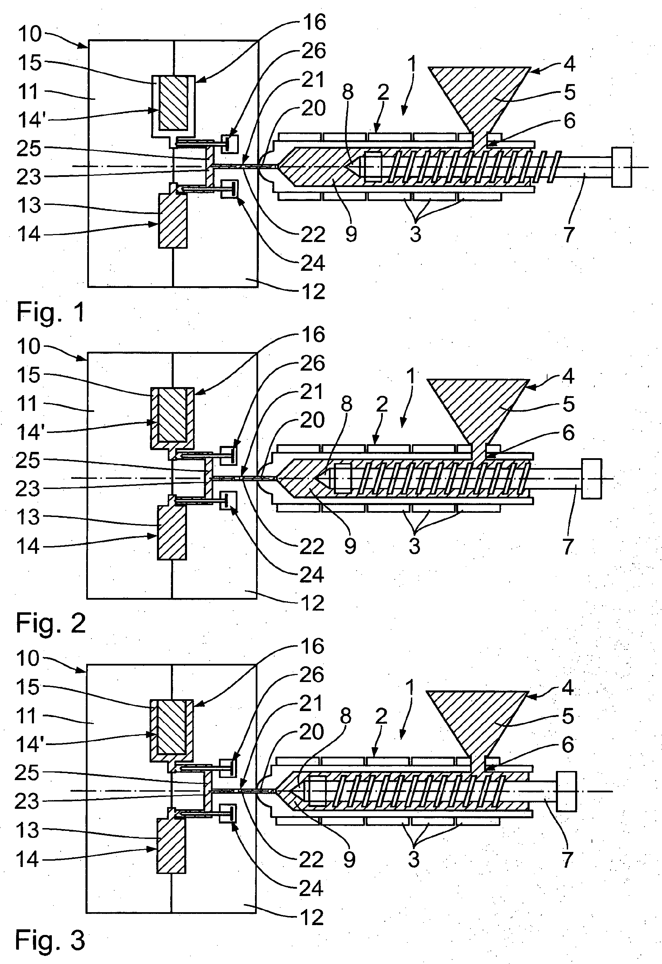

Die Fig. 1 bis 6 zeigen durchgehend ein und dieselbe Spritzgießmaschine, die im Folgenden erläutert wird. So ist eine übliche Plastifiziereinheit 1 mit einem Schneckenzylinder 2 vorgesehen, der durch Temperiermanschetten 3 auf seiner Länge auf ein vorgegebenes Temperaturprofil eingestellt wird. Über einen Einfülltrichter 4 wird das zu verarbeitende Kunststoffmaterial 5, beispielsweise transparentes Polykarbonat, in Granulatform bereitgestellt und in der Einfüllzone 6 in den Schneckenzylinder 2 eingebracht.

In Letzterem ist in üblicher Weise eine Plastifizierschnecke 7 um ihre Längsachse drehbar und parallel dazu als Schneckenkolben verschiebbar gelagert. Durch Rotation der Schnecke wird das Kunststoffmaterial 5 in den Schneckenzylinder 2 eingezogen, durch ihn hindurch transportiert, durch innere Scher- und Reibungskräfte aufgeschmolzen und homogenisiert, bis das Material vor der der Einfüllzone 6 abgewandten Spitze 8 der Plastifizierschnecke 7 als Massepolster 9 zum Einschießen in ein als Ganzes mit 10 bezeichnetes Spritzgießwerkzeug zur Verfügung steht.

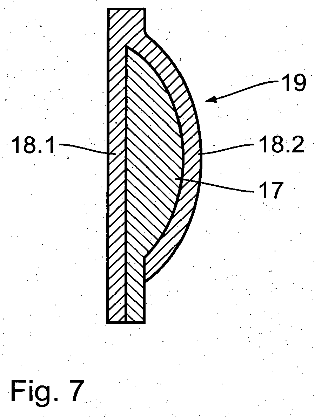

Dieses Spritzgießwerkzeug 10 weist zwei Formhälften 11, 12 auf, die in üblicher Weise durch eine nicht dargestellte Schließeinheit geöffnet und geschlossen und mit Schließdruck beaufschlagt werden können. Die beiden Formhälften 11, 12 bilden gemeinsam zwei Kavitäten, nämlich eine erste, so bezeichnete Vor-Kavität 13 für einen Vorspritzling 14 und eine zweite, so bezeichnete Nach-Kavität 15 für einen Nachspritzling 16. Bei dem Vorspritzling 14 handelt es sich beispielsweise um den plan-konvexen Kernteil 17 der in Fig. 7 gezeigten optischen Linse, während es sich bei dem Nachspritzling 16 um die beiderseits dieses Kernteils 17 herumgespritzen Oberflächenschichten 18.1, 18.2 der optischen Plan-Konvex-Linse 19 handelt.

Die an das Spritzgießwerkzeug 10 angesetzte Einspritzdüse 20 des Schneckenzylinders 2 mündet in einen als Ganzes mit 21 bezeichneten Verteiler, der düsenseitig einen Heißkanal 22 aufweist. Dieser verzweigt in einem Zweigkanal 23 zur Vor-Kavität 13, wobei in diesem Zweigkanal 23 ein Verschlussorgan in Form eines Nadelventils 24 angeordnet ist. Ein weiterer Zweigkanal 25 des Verteilers 21 führt zur Nach-Kavität 15. Auch in diesem Zweigkanal 25 ist ein Nadelventil 26 als Verschlussorgan vorgesehen.

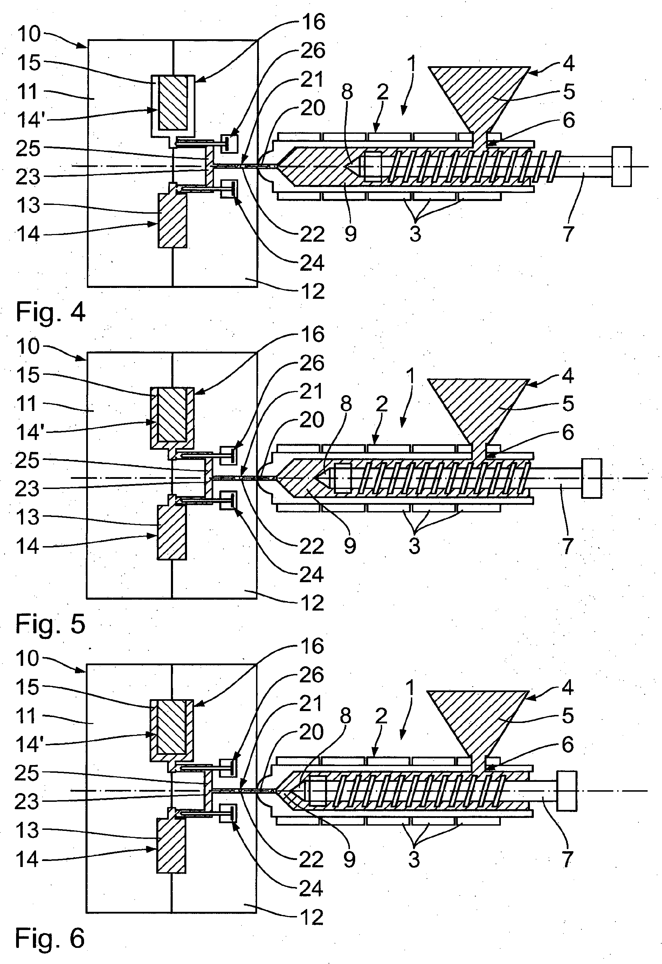

Verschiedene Alternativen für auf der Spritzgießmaschine gemäß Fig. 1 bis 6 ablaufende Betriebsverfahren sind anhand der Fig. 1 bis 3 bzw. 4 bis 6 im Folgenden näher zu erläutern. So wird bei beiden Alternativen von einer Situation ausgegangen, wie sie in den Fig. 1 bzw. 4 dargestellt ist. Die Plastifizierschnecke 7 befindet sich am Anfang ihres Einspritzhubes, d. h., dass das Massepolster 9 noch relativ großvolumig ist. In dieser Phase wird der Vorspritzling 14 gespritzt, wozu das Nadelventil 24 im Zweigkanal 23 zur Vor-Kavität 13 geöffnet, das zweite Nadelventil 26 im Zweigkanal 25 zur Nach-Kavität 15 allerdings geschlossen ist. Sobald durch einen entsprechenden Teilhub der Plastifizierschnecke 7 die Vor-Kavität 13 komplett gefüllt ist, wird das Nadelventil 24 geschlossen und das Nadelventil 26 zur Nach-Kavität 15 geöffnet. Dort befindet sich der Vorspritzling 14' aus dem vorherigen Schuss, der zur Bildung der beiden Oberflächenschichten 18.1, 18.2 der Linse 19 mit dem Nachspritzling 16 umspritzt wird. Dies erfolgt im selben Einspritzhub der Plastifizierschnecke 7.

In diesem zweiten Prozessschritt für das Spritzen des Nachspritzlings 16 ist bei der in Fig. 2 gezeigten Verfahrensalternative das Nadelventil 24 geschlossen worden, so dass der Vorspritzling 14 ohne Nachdruck abkühlt.

Bei der in Fig. 5 gezeigten Alternative bleibt während des Spritzens des Nachspritzlings 16 bei geöffnetem Nadelventil 26 auch das Nadelventil 24 im Zweigkanal 23 zur Vor-Kavität 13 geöffnet, so dass der dortige Vorspritzling 14 unter Beaufschlagung durch den im Spritzsystem herrschenden Druck kühlt.

Im nächsten Prozessschritt, wie er in den Fig. 3 bzw. 6 dargestellt ist, sind in beiden Varianten die Nadelventile 24, 26 in den Zweigkanälen 23, 25 zur Vor-Kavität 13 und Nach-Kavität 15 geöffnet. Der Einspritzhub der Plastifizierschnecke 7 sorgt nun für den entsprechenden Nachdruck, der die Schwindung sowohl beim Vorspritzling 14, als auch beim Nachspritzling 16 (einschließlich dem Vorspritzling 14') ausgleicht. Während dieser Nachdruckphase kühlen Vor- und Nachspritzling 14, 16 weiter.

Wie in den Fig. 1 bis 6 nicht näher dargestellt ist, werden anschließend in üblicher Weise nach einer entsprechenden Kühlzeit für Vor- und Nachspritzling 14, 16 diese beiden Bauteile aus dem Spritzgießwerkzeug 10 durch Öffnen der Formhälften 11, 12 entnommen und der Vorspritzling 14 in die Nach-Kavität 15 umgesetzt. Zeitgleich kann die Plastifizierschnecke 7 in die Ausgangsposition zurückgezogen und Kunststoffmaterial für den folgenden Einspritzhub der Plastifizierschnecke 7 eingebracht und entsprechend aufbereitet werden.

## Patentansprüche

1. Verfahren zur Herstellung von mehrschichtigen Kunststoff-Formteilen aus einem einheitlichen thermoplastischen Kunststoff, insbesondere zur Herstellung von optischen Bauteilen, auf einer Spritzgießmaschine umfassend
- eine Plastifiziereinheit (1) mit einer Plastifizierschnecke (7), und
- ein davon versorgtes Spritzgießwerkzeug (10), das aufweist
= mindestens ein Paar von Formkavitäten (13, 15), von denen eine erste Kavität - Vor-Kavität (13) - für einen Vorspritzling (14) und eine zweite Kavität - Nach-Kavität (15) - für einen auf einen Vorspritzling (14') zu spritzenden Nachspritzling (16) bestimmt ist,
= einen der Einspritzdüse (20) der Plastifiziereinheit (1) nachgeordneten Verteiler (21), der die Einspritzdüse (20) der Plastifiziereinheit (1) über zwei Zweigkanäle (23, 25) mit jeweils der Vor- und Nach-Kavität (13,15) verbindet,
= jeweils ein steuerbares Verschlussorgan (24, 26) in den beiden Zweigkanälen (23, 25), und
- **gekennzeichnet durch** folgende Verfahrensschritte:
= Spritzen des Vorspritzlings (14) in der Vor-Kavität (13) bei geschlossenem Verschlussorgan im Zweigkanal (25) zur Nach-Kavität (16),
= im selben Einspritzhub der Plastifizierschnecke (7) Spritzen des Nachspritzlings (16) auf einen aus einem Vorschuss stammenden, in der Nach-Kavität (16) sitzenden Vorspritzling (14') bei geöffnetem Verschlussorgan (26) im Zweigkanal (25) zur Nach-Kavität (16) bei gleichzeitigem Kühlen des in der Vor-Kavität (13) sitzenden Vorspritzlings (14),
= gleichzeitiges Beaufschlagung von Vor- und Nach-Kavität (13, 15) am Ende des selben Einspritzhubes der Plastifizierschnecke (7) mit Nachdruck bei geöffneten Verschlussorganen (24, 26) in den Zweigkanälen (23, 25) zur Vor- und Nach-Kavität (13, 15) unter gleichzeitigem Kühlen von Vor- und Nachspritzling (14, 16), und
= weiteres Kühlen von Vor- und Nachspritzling (14, 16) sowie Entnahme von Vor- und Nachspritzling (14, 16) aus dem Spritzgießwerkzeug (10) während des Rückzuges der Plastifizierschnecke (7) und der Aufbereitung des Kunststoffmaterials für den folgenden Einspritzhub der Plastifizierschnecke (7).

2. Verfahren nach Anspruch 1, **dadurch gekennzeichnet, dass** während des Spritzens des Nachspritzlings (16) das Verschlussorgan (24) im Zweigkanal (23) zur Vor-Kavität (13) geschlossen ist.

3. Verfahren nach Anspruch 1, **dadurch gekennzeichnet, dass** während des Spritzens des Nachspritzlings (16) das Verschlussorgan (24) im Zweigkanal (23) zur Vor-Kavität (13) geöffnet ist.

4. Verfahren nach einem der Ansprüche 1 bis 3, **dadurch gekennzeichnet, dass** der aus der Vor-Kavität (13) entnommene Vorspritzling (14) direkt in die Nach-Kavität (15) zum Überspritzen mit dem Nachspritzling (16) im darauffolgenden Einspritzhub der Plastifizierschnecke (7) umgesetzt wird.

## Claims

1. Method for producing multi-layered plastic mouldings made from a homogenous thermoplastic, in particular for producing optical components, on an injection moulding machine comprising
- a plasticising unit (1) with a plasticising screw (7), and
- an injection mould (10) supplied by the latter which comprises
-- at least one pair of mould cavities (13, 15), a first cavity of which - pre-cavity (13) - is intended for a premoulding (14) and a second cavity-after-cavity (15) - is intended for an after-moulding (16) to be injected onto a premoulding (14'),
-- a distributor (21) arranged downstream of the injection nozzle (20) of the plasticising unit (1), which distributor connects the injection nozzle (20) of the plasticising unit (1) via two branch channels (23, 25) to the pre-cavity and after-cavity (13, 15) respectively,
-- a controllable sealing device (24 , 26) in the two branch channels (23 , 25) respectively, and
**characterised by** the following method steps:
-- injecting the premoulding (14) in the pre-cavity (13) with a closed sealing device in the branch channel (25) to the after-cavity (16),
-- in the same injection stroke of the plasticising screw (7) injecting the after-moulding (16) onto a premoulding (14') coming from an advance and sitting in the after-cavity (16) with an opened sealing device (26) in the branch channel (25) to the after-cavity (16) with the simultaneous cooling of the premoulding (14) sitting in the pre-cavity (13),
-- simultaneous charging of the pre-cavity and after-cavity (13, 15) at the end of the same injection stroke of the plasticising screw (7) with pressure with opened sealing devices (24, 26) in the branch channels (23, 25) to the pre-cavity and after-cavity (13, 15) with the simultaneous cooling of the premoulding and after-moulding (14, 16), and
-- further cooling of the premoulding and after-moulding (14, 16) and removal of the premoulding and after-moulding (14, 16) from the injection moulding tool (10) during the withdrawal of the plasticising screw (7) and the preparation of the plastic material for the following injection stroke of the plasticising screw (7).

2. Method according to claim 1, **characterised in that** during the injection of the after-moulding (16) the sealing device (24) in the branch channel (23) is closed to the pre-cavity (13).

3. Method according to claim 1, **characterised in that** during the injection of the after-moulding (16) the sealing device (24) in the branch channel (23) is open to the pre-cavity (13).

4. Method according to any one of claims 1 to 3, **characterised in that** the premoulding (14) removed from the pre-cavity (13) is turned out directly into the after-cavity (15) for injecting over with the after-moulding (16) in a following injection stroke of the plasticising screw (7).

## Revendications

1. Procédé de fabrication de pièces moulées multicouches en matière plastique à partir d'une matière plastique thermoplastique unitaire, en particulier de fabrication de composants optiques, sur une machine de moulage par injection, comprenant :
- une unité de plastification (1) dotée d'une vis de plastification (7) et
- un outil de moulage par injection (10) alimenté par celle-ci, qui présente
-- au moins une paire de cavités de moulage (13, 15) dont une première cavité - la pré-cavité (13) - est destinée à une pièce pré-injectée (14) et une deuxième cavité - la post-cavité (15) - est destinée à une pièce post-injectée (16) qui doit être injectée sur une pièce pré-injectée (14'),
-- un distributeur (21) disposé en aval de la buse d'injection (20) de l'unité de plastification (1) et reliant la buse d'injection (20) de l'unité de plastification (1) à respectivement la pré- et la post-cavité (13, 15) par le biais de deux canaux ramifiés (23, 25),
-- respectivement un organe d'obturation (24, 26) pouvant être commandé dans les deux canaux ramifiés (23, 25) et
- **caractérisé par** les étapes de procédé suivantes :
-- l'injection de la pièce pré-injectée (14) dans la pré-cavité (13) quand l'organe d'obturation est en position fermée dans le canal ramifié (25) menant à la post-cavité (16),
-- dans la même course d'injection de la vis de plastification (7), l'injection de la pièce post-injectée (16) sur une pièce pré-injectée (14') provenant d'une injection précédente et siégeant dans la post-cavité (16) quand l'organe d'obturation (26) est en position ouverte dans le canal ramifié (25) menant à la post-cavité (16), tout en refroidissant simultanément la pièce pré-injectée (14) siégeant dans la pré-cavité (14),
-- la soumission simultanée de la pré- et post-cavité (13, 15), à la fin de la même course d'injection de la vis de plastification (7), à une post-pression quand les organes d'obturation (24, 26) sont en position ouverte dans les canaux ramifiés (23, 25) menant à la pré- et post-cavité (13, 15) tout en refroidissant simultanément la pièce pré-injectée et la pièce post-injectée (14, 16), et
-- le refroidissement ultérieur de la pièce pré-injectée et la pièce post-injectée (14, 16) ainsi que le retrait de la pièce pré-injectée et la pièce post-injectée (14, 16) de l'outil de moulage par injection (10) pendant le retour de la vis de plastification (7) et la préparation de la matière plastique pour la course d'injection suivante de la vis de plastification (7).

2. Procédé selon la revendication 1, **caractérisé en ce que**, pendant l'injection de la pièce post-injectée (16), l'organe d'obturation (24) dans le canal ramifié (23) menant à la pré-cavité (13) est en position fermée.

3. Procédé selon la revendication 1, **caractérisé en ce que**, pendant l'injection de la pièce post-injectée (16), l'organe d'obturation (24) dans le canal ramifié (23) menant à la pré-cavité (13) est en position ouverte.

4. Procédé selon l'une des revendications 1 à 3, **caractérisé en ce que** la pièce pré-injectée (14) retirée de la pré-cavité (13) est transférée directement dans la post-cavité (15) pour le surmoulage avec la pièce post-injectée (16) lors de la course d'injection suivante de la vis de plastification (7).
